(19)

Europäisches Patentamt

European Patent Office

Office européen des brevets

(11) **EP 2 608 434 A1**

(12) **EUROPEAN PATENT APPLICATION**

(43) Date of publication:
**26.06.2013 Bulletin 2013/26**

(51) Int Cl.:
**H04J 11/00** (2006.01)

(21) Application number: **12198281.3**

(22) Date of filing: **19.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.12.2011 CN 201110428550**

(71) Applicant: **Spreadtrum Communications
(Shanghai) Co., Ltd.
Shanghai 201203 (CN)**

(72) Inventors:
• **SHEN, Xuqiang**
**Zhangjiang (CN)**
• **DONG, Xiaojian**
**Zhangjiang (CN)**

(74) Representative: **Curley, Donnacha John et al
Hanna Moore & Curley
13 Lower Lad Lane
Dublin 2 (IE)**

(54) **Communications terminal, method and apparatus for interference cancellation, and method of demodulation**

(57) A method and a communication terminal for reducing or cancelling inter-cell interference in a multicarrier communication system, where multicarrier symbols are received that include pilot data from interface stations not in communication with the communication terminal. Subcarrier data of the subcarriers that contain the pilot data are retrieved and used to reduce interference in the received multicarrier symbols.

FIG. 1B

**Description**

**Related Applications**

This application claims the priority and benefit under Article 8 of Patent Cooperation Treaty of Chinese Patent Application No. 201110428550.X, filed on December 19, 2011, the content of which is incorporated herein by reference in its entirety.

**Technical Field**

This disclosure relates to methods and apparatus for communication systems, and more particularly, to methods and apparatus for reducing or cancelling interference, and for demodulating data.

**Background**

Orthogonal Frequency Division Multiplexing (OFDM) is one of the Multi-Carrier Modulation (MCM) technologies. OFDM divides a frequency channel or frequency carrier into multiple orthogonal sub-channels each associated with a frequency subcarrier and allows for transmission of sub-data streams in parallel at low rates as opposed to a single data stream over a single frequency carrier at a much higher rate. The low-rate sub-data streams each modulate one of the subcarriers. At the receiving end, the received orthogonal subcarriers each carrying a sub-data stream can be separated from one another using appropriate techniques to reduce inter-channel interference (ICI) between the sub-channels. Because the bandwidth of each sub-channel is smaller than the bandwidth of the channel, fading in each sub-channel generally can be considered flat across the frequency bandwidth of that sub-channel. As a result, inter symbol interference may be eliminated. In addition, because the bandwidth of each sub-channel is only a small portion of the bandwidth of the original channel, channel equalization also becomes easier.

The Long Term Evolution (LTE) project is directed to developing wireless communications standards as an evolution from 3G technology. The project began at the 2004 3rd Generation Partnership Project (3GPP) Conference held in Toronto. LTE uses OFDM and MIMO (Multiple-Input Multiple-Output) technologies. With a 20 MHz spectral bandwidth, LTE can provide a downlink peak rate of 326 Mbit/s and an uplink peak rate of 86 Mbit/s. LTE can improve user experience at cell edges, increase cell capacities, and reduce system latencies.

An LTE network may include a number of cells, each corresponding to a geographical area. Within each cell, communication terminals such as mobile phones or, more generally, user equipment (UE), access network services such as phone services or Internet services, data streaming, etc., through an interface station such as a base station, which is also referred to as eNode B in LTE terminology. An LTE system can implement either Time Division Duplex (TDD) or Frequency Division Duplex (FDD). In TDD, communications in two opposite directions between the base station and mobile phones occur in the same frequency band but different time slots. In FDD, communications in two opposite directions between the base station and mobile phones occur at the same time but in different frequency bands.

Different frequency bands can be assigned to immediately neighbor cells. However, because of limited resources, frequencies must be reused across cells in a network, which causes interference between neighbor cells with the same frequencies. Avoiding inter-cell interference between neighbor cells with the same frequencies is difficult. Interference is especially severe on cell edges, affecting the performance of UE and reducing throughput.

In an OFDM system such as LTE, cancellation of the same-frequency interference can be difficult with conventional methods such as traditional interference cancellation or Minimum Mean Square Error (MMSE) equalization. Presently, in an OFDM system including an FDD LTE or a TDD LTE system, interference from the same-frequency neighbor cells is usually treated as pure noise. To minimize the impact of noise generally requires increased coding redundancy, which in turn reduces throughput.

International patent application No. W02011136518 (A2) discloses an example of noise estimation method and a method and an apparatus for controlling inter-cell interference of control channels in an OFDM-based hierarchical cellular system.

**SUMMARY**

Consistent with an embodiment of the present disclosure, there is provided a method in a communication terminal for reducing or cancelling inter-cell interference in a multicarrier communication system, wherein communication in the multicarrier communication system is carried out over a plurality of subcarriers, and wherein the communication terminal communicates with an interface station. The method includes receiving multicarrier symbols, the multicarrier symbols including pilot data from other interface stations not in communication with the communication terminal; retrieving subcarrier data of the subcarriers containing the pilot data from the received multicarrier symbols; and reducing interference in the received multicarrier symbols based on the retrieved subcarrier data.

Consistent with another embodiment of the present disclosure, there is provided a communication terminal in a multicarrier communication system, wherein communication in the multicarrier communication system is carried out over a plurality of subcarriers, and wherein the communication terminal communicates with an interface station. The communication terminal includes a receiver that receives multicarrier symbols, the multicarrier symbols including pilot data from other interface stations not in communication with the communication terminal; a frequency domain data receiver that receives frequency domain data in the multicarrier symbols; a data selector that retrieves subcarrier data of the subcarriers containing the pilot data from the received multicarrier symbols; and an interference canceller that reduces interference in the multicarrier symbols based on the retrieved subcarrier data.

It is to be understood that both the foregoing general description and the following detailed description are exemplary and explanatory only and are not restrictive of the invention, as claimed.

**BRIEF DESCRIPTION OF THE DRAWINGS**

The accompanying drawings, which are incorporated in and constitute a part of this specification, illustrate embodiments consistent with the subject matter and, together with the description, serve to explain the principles of the subject matter.

FIG. 1A illustrates a method for reducing or cancelling interference in a communication terminal, consistent with an embodiment.

FIG. 1B illustrates a method for reducing or cancelling interference in a communication terminal, consistent with another embodiment.

FIG. 2 illustrates a symbol-subcarrier diagram showing the distribution of cell reference symbols in a normal cyclic prefix scheme with a one-antenna configuration, consistent with an embodiment.

FIG. 3 illustrates a symbol-subcarrier diagram showing the distribution of cell reference symbols in a normal cyclic prefix scheme with a two-antenna configuration, consistent with another embodiment.

FIG. 4 illustrates a symbol-subcarrier diagram showing the distribution of cell reference symbols in a normal cyclic prefix scheme with a four-antenna configuration, consistent with another embodiment.

FIG. 5 illustrates an exemplary signal processing flow for reducing or canceling interference consistent with an embodiment.

FIG. 6 illustrates an exemplary block diagram showing components for reducing or cancelling interference in an apparatus consistent with an embodiment.

**DESCRIPTION OF THE EMBODIMENTS**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of systems and methods consistent with aspects related to the invention as recited in the appended claims.

Consistent with embodiments of the present disclosure, in a multicarrier communication system where communication terminals communicate over multiple subcarriers, pilot signals or reference signals transmitted on one or more of the subcarriers can be used to estimate interference level and to cancel same-frequency inter-cell interference. In particular, pilot signals or reference signals are known signals transmitted for reference purposes such as channel detection or channel estimation. A communication terminal receiving a composite multicarrier signal that includes not only signals from the present cell (i.e., the cell that the communication terminal is communicating with at the moment), but also signals from neighbor cells, can detect the pilot signals from the neighbor cells, reconstruct the interfering signals resulting from transmissions from the neighbor cells, and cancel the inter-cell interference by subtracting the reconstructed interference signals from the received composite signals. Such interference cancellation technology can be applied to individual multicarrier symbols, e.g., OFDM symbols.

Embodiments described below use LTE systems and devices as an example. In an LTE system, communication terminals, such as mobile phones or, more generally, user equipment (UE), communicate with base stations or eNode Bs to access network services such as telephone services, Internet, data streaming, etc. An LTE system can implement either Time Division Duplex (TDD) or Frequency Division Duplex (FDD). In TDD, communications in two opposite directions between the base station and mobile phones occur in the same frequency band but different time slots. In FDD, communications in two opposite directions between the base station and mobile phones occur at the same time but in different frequency bands.

It is to be understood, however, that technologies described herein can be equally applied to such other OFDM systems as WiFi or WiMAX systems or other multi-carrier systems. The theories and applications of OFDM and/or multicarrier technologies are well known in the art and a background discussion thereof is therefore not provided here.

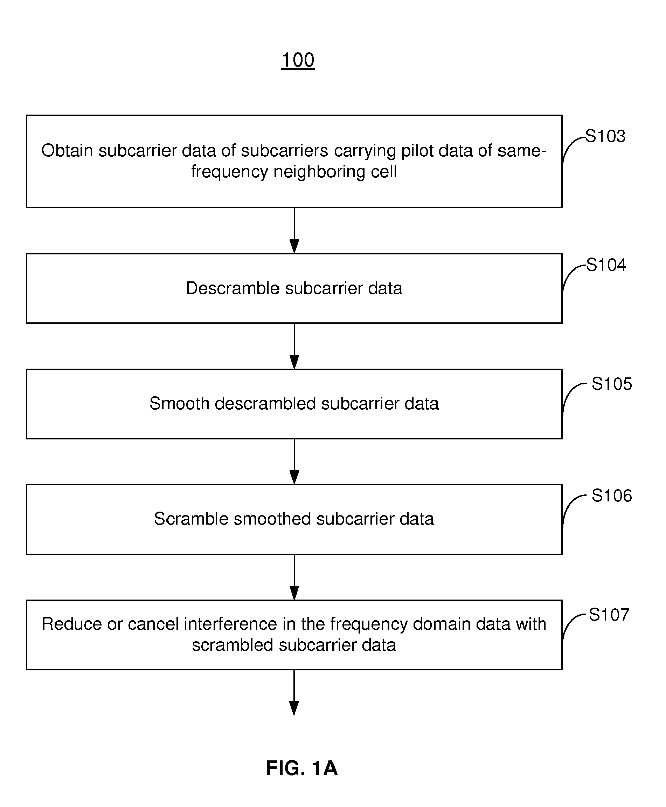

FIG. 1A illustrates a method 100 in a communication terminal for reducing or cancelling interference, according to an exemplary embodiment. The communication terminal receives multicarrier symbols such as OFDM symbols, and recovers frequency domain data from the received OFDM symbols. From the recovered frequency domain data, in step S103, the communication terminal obtains subcarrier data (i.e., data carried on each subcarrier) of the subcarriers carrying pilot data of a same-frequency neighbor cell. To retrieve the subcarrier data of the neighbor cell, the communication terminal also first detects the system information of the neighbor cell, such as cell ID, antenna configuration, pilot transmission timing, etc.

In step S104, the communication terminal descrambles the subcarrier data. In step S105, the communication terminal performs a smoothing operation on the descrambled subcarrier data. In step S106, the communication terminal scrambles the smoothed subcarrier data. Then, in step S107, the communication terminal reduces or cancels interference in the frequency domain data of the OFDM symbols with the scrambled subcarrier data.

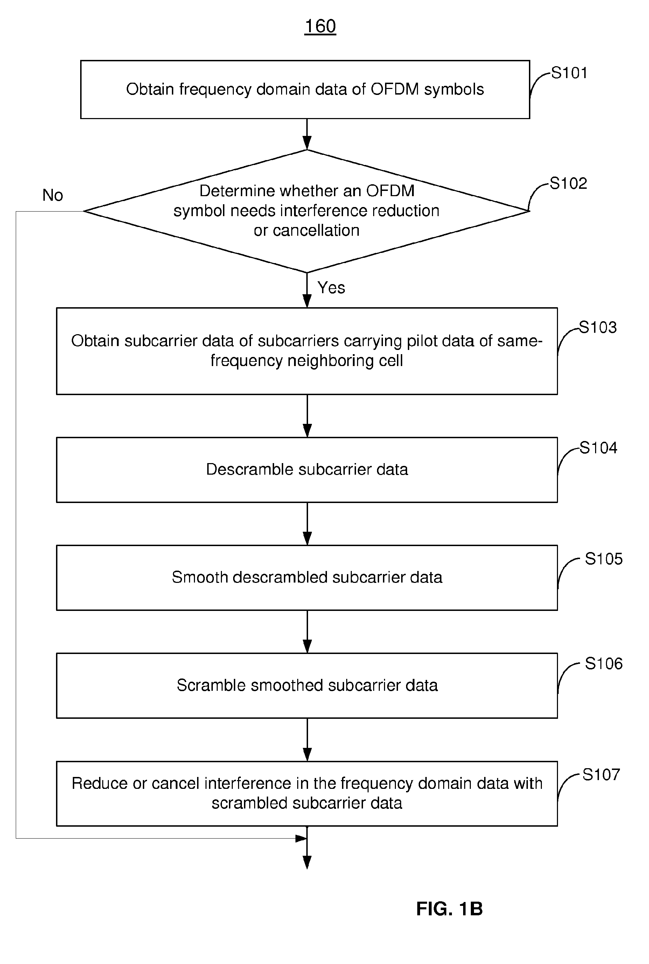

In some embodiments, the interference reduction or cancellation technology illustrated in FIG. 1A is carried out with respect to the frequency domain data of each OFDM symbol. In some other embodiments, interference reduction or cancellation need not be performed on all OFDM symbols. For example, some OFDM symbols may not contain interference from same-frequency neighbor cells or such interference may be relatively weak, in which case performing interference reduction or cancellation on such OFDM symbols would unnecessarily increase the amount of data computation and reduce efficiency. Thus, consistent with some embodiments of the present disclosure, before interference cancellation, the communication terminal makes a determination of whether interference reduction or cancellation is needed for an OFDM symbol, as illustrated in FIG. 1B.

FIG. 1B illustrates a method 160 in a communication terminal for reducing or cancelling interference. Steps S103 - S107 are the same or substantially the same as the corresponding steps in FIG. 1A. Method 160 shown in Fig. 1B, however, includes two additional steps. In particular, in step S101, the communication terminal obtains frequency domain data of OFDM symbols. In step S102, the communication terminal determines whether an OFDM symbol needs interference reduction or cancellation based on the frequency domain data of the OFDM symbol. If interference reduction or cancellation is needed for an OFDM symbol, the communication terminal proceeds to steps S103 - S107 with respect to that OFDM symbol.

Obtaining frequency domain data of OFDM symbols, as in FIG. 1B, can be done with methods known in the art, such as Fast Fourier Transformation (FFT) and/or any other time domain and frequency domain conversion methods. The frequency domain data may include subcarrier data, the index of the receiving antenna, the index of the received OFDM symbol, and/or the index of the subcarrier.

As described above, LTE can include either a Time Division Duplex (TDD) LTE or a Frequency Division Duplex (FDD) LTE. Thus, in an LTE system, signal transmissions can have two different frame structures. In both FDD and TDD LTE, a radio frame is 10 milliseconds (ms). In FDD, a frame is divided into 10 subframes and each subframe is further divided into 2 time slots. Each subframe is 1 ms and each time slot is 0.5 ms. In TDD LTE, a frame is divided into 2 half-frames, each half-frame is divided into 5 subframes, and each subframe contains 2 time slots. Each half-frame is 5 ms, each subframe is 1 ms, and each slot is 0.5 ms. The two time slots within each subframe are referred to as the even-numbered slot and the odd-numbered slot, respectively.

Each time slot may contain a number of OFDM symbols. As is well known in the art, an OFDM symbol includes a cyclic prefix, which is a repetition of an end portion of the symbol, to combat multipath effects. The number of OFDM symbols in each time slot thus depends on the length of the cyclic prefix (CP). In LTE, when a normal cyclic-prefix (Normal CP) is used, one time slot contains 7 OFDM symbols; when an extended cyclic-prefix (Extended CP) is used, one time slot contains 6 OFDM symbols.

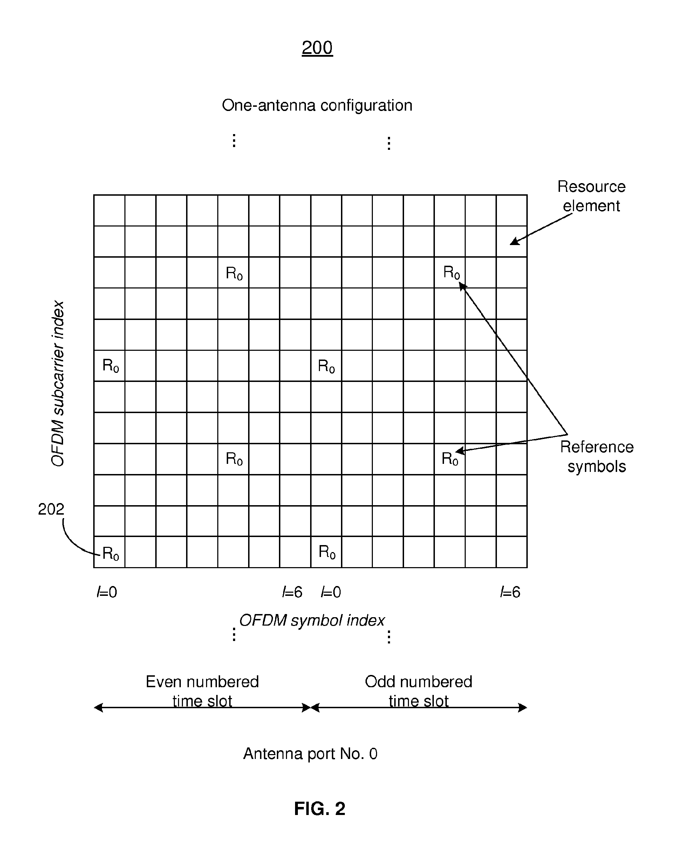

FIG. 2 shows a two-dimensional resource grid 200 for LTE networks, where the horizontal dimension reflects OFDM symbols in time and the vertical dimension reflects subcarriers. An OFDM symbol is transmitted over a number of subcarriers for a time duration called a symbol period. A basic resource unit in LTE is defined as one subcarrier per OFDM symbol time period and is referred to as a Resource Element (RE). An RE is the smallest block on the 2-dimensional symbol-subcarrier grid.

With the symbol-subcarrier grid and resource elements defined thereon, data can be identified with reference to the position of the corresponding resource elements on the grid. As is well known in the art, an OFDM symbol, which is a time domain waveform, generally contains some form of data in the frequency domain, i.e., data carried over the various subcarriers. In a MIMO configuration, where a transmitter may transmit signals from multiple transmitting antennas and a receiver may receive multiple transmitted signals at multiple receiving antennas, frequency domain data over a particular subcarrier in an OFDM symbol can be expressed as a complex number $DataAftFft\_jf\_l(k)$, where j is the receiving antenna index, $l$ is the OFDM symbol index in the subframe, and k is the subcarrier index.

Pilot signals, also referred to as reference signals (RS), are known signals for purposes of channel estimation or channel detection. In an LTE network, the base station or eNode B in each cell periodically transmits pilot signals such that the mobile phones or UE can detect the cell and estimate channel properties in that cell. Pilot signals are embedded in OFDM symbols transmitted by eNode B. FIGS. 2-4 illustrate some exemplary arrangements of pilot signals on the symbol-subcarrier grid for eNode B transmissions with the normal cyclic prefix scenario.

Symbol-subcarrier grid 200 in FIG. 2 shows the distribution of the cell reference signals with a one-antenna configuration for eNode B transmissions, e.g., antenna port No. 0. In the time dimension, OFDM symbols have indices 0 through 6 in every time slot, with two slots shown in FIG. 2. Although the exact index numbers are not shown in the figure, subcarriers in the subcarrier dimension (vertical) are also indexed.

As shown in FIG. 2, in the horizontal direction, a subframe is divided into two time slots, namely, the even-numbered slot and the odd-numbered slot. With the normal cyclic prefix shown in FIG. 2, each time slot has 7 OFDM symbols, with indices $l = 0$, $l = 1$, ... $l = 6$, respectively. In the vertical direction, 12 subcarriers are shown in FIG. 2. Reference signals or pilot signals may comprise multiple reference symbols each occupying one resource element. As an example, in FIG. 2, $R_0$ (reference numeral 202) indicates reference symbols that are transmitted along with data in other resource elements from antenna port No. 0.

In the particular example shown in FIG. 2, in each time slot, reference symbols $R_0$ are distributed in two OFDM symbols with indices $l = 0$ and $l = 4$. In the first OFDM symbol ($l = 0$), reference symbols $R_0$ are carried over the first and seventh subcarriers from the bottom. In the fifth OFDM symbol ($l = 4$), reference symbols $R_0$ are carried over the fourth and tenth subcarriers. In the extended cyclic prefix configuration, which is not shown in the figure, where each time slot has only 6 OFDM symbols, reference symbols may be distributed in the first and fourth (as opposed to fifth) OFDM symbols with indices $l = 0$ and $l = 3$. Reference symbols in the first OFDM symbol of each time slot allows early detection and demodulation of downlink transmissions, i.e., transmissions from the base station or eNode B to the mobile devices.

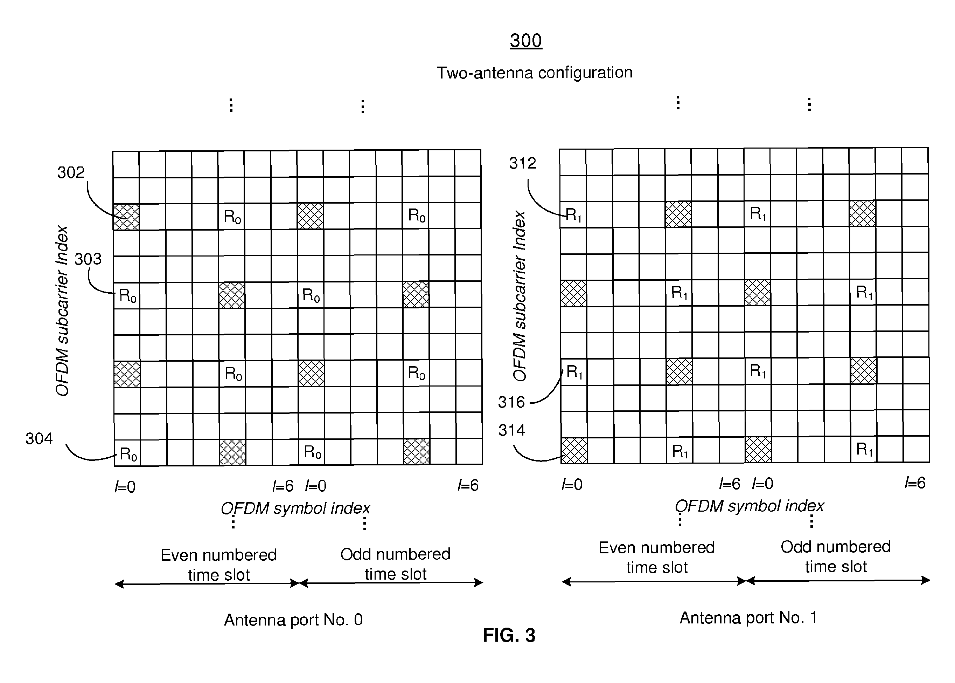

FIG. 3 illustrates a symbol-subcarrier diagram 300 showing the distribution of cell reference symbols for a two-antenna configuration. In other words, a base station in a cell transmits signals over two antennas, e.g., antenna port No. 0 and antenna port No. 1. In FIG. 3, the symbol-subcarrier diagrams for antenna ports No. 0 and No. 1 are shown separately. In FIG. 3, the distribution of reference symbols for antenna port No. 0 is the same as that shown in FIG. 2, while the distribution of reference symbols for antenna port No. 1 differs from that of antenna port No. 0.

FIG. 3 also shows that some resource blocks (e.g., reference numerals 302, 314) are shaded, indicating no transmission from an antenna. For example, the base station or eNode B transmits no signal from antenna port No. 0 on the fourth subcarrier in the first OFDM symbol, which coincides with a transmission of reference symbol $R_1$ (reference numeral 316) in that same resource element from antenna port No. 1. Likewise, when reference symbol $R_0$ is transmitted from antenna port No. 0 on the first subcarrier in the first OFDM symbol, the base station does not transmit any signal from antenna port No. 1. Because the multiple antennas transmit at the same frequencies, silencing one antenna while transmitting reference symbols from the other antenna is necessary to avoid mutual interferences.

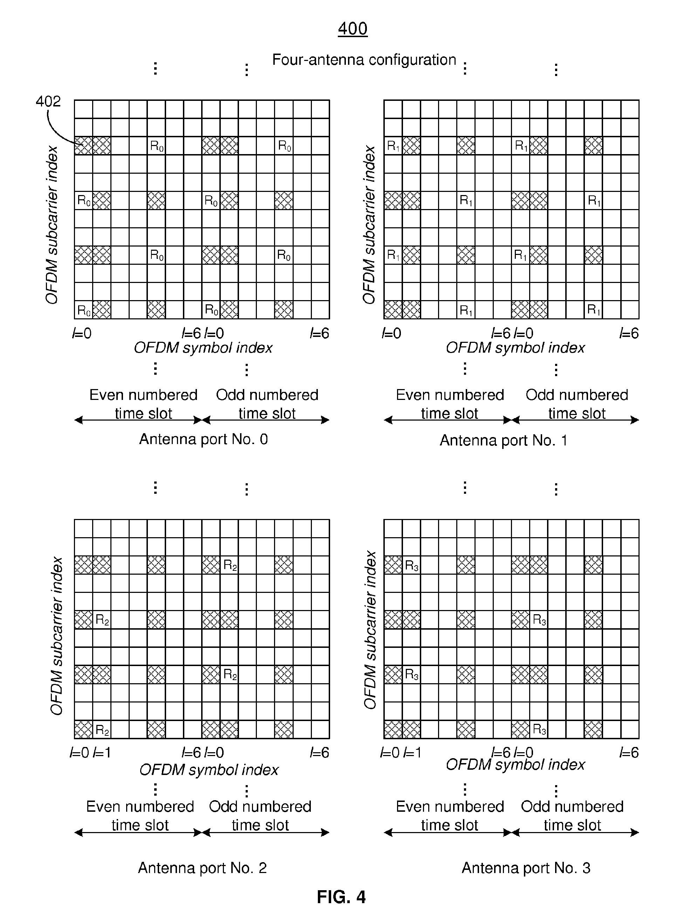

FIG. 4 illustrates a symbol-subcarrier diagram 400 showing the distribution of cell reference symbols for a four-antenna configuration, i.e., antenna port Nos. 0 - 3. In FIG. 4, the distributions of reference symbols for antenna port Nos. 0 and 1 are the same as those shown in FIG. 3, while the distributions of reference symbols for antenna port Nos. 2 and 3 are different. In the particular example shown in FIG. 4, reference symbols transmitted from antenna port Nos. 2 and 3, labeled in the figure respectively as $R_2$ and $R_3$, are transmitted in one OFDM symbol per time slot as opposed to two OFDM symbols in the case of antenna port Nos. 0 and 1. For example, for antenna port No. 2, reference symbols $R_2$ are in the second OFDM symbol ($l = 1$) of each time slot.

Similar to what FIG. 3 shows, in FIG. 4, shaded blocks, such as block 402, indicate no transmission from the current antenna port in a particular resource element. And, to avoid interference, when reference symbols are transmitted from one of the four antennas, the other three antennas are silent.

One of ordinary skill in the art would appreciate that the distribution of the reference symbols described above is for illustration only and the reference symbols can have other distributions.

As illustrated in FIGs. 2-4, not all OFDM symbols in the received data include reference symbols or pilot signals. And in those OFDM symbols that do carry pilot signals or pilot data, pilot data may be carried over different subcarriers between OFDM symbols and/or between cells. For example, the positions of subcarriers that carry pilot signals, expressed as $k0\_r\_p\_l$, is related to cell identifier CellId_r, index p of the receiving antenna, and index $l$ of the OFDM symbol, where r is the index of the cell and $l$ is the index of an OFDM symbols within a sub-frame (as opposed to within a time slot). In a normal CP configuration, $l$ may be in the range of 0 - 13. In an extended CP configuration, $l$ may be in the range of 0 - 11. In the examples shown in FIGs. 2 - 4, subcarrier position $k0\_r\_p\_l$ may be 0 or 3.

As a result, in a resource element that does not contain pilot data of the current cell, the communication terminal may receive pilot data from same-frequency neighbor cells, which results in interference and affects the communication terminal's ability to demodulate physical channels of the current cell. Such interference may have the most significant impact on system performance when the pilot data from neighbor cells are present in OFDM symbols 0 and 1 in a subframe of the current cell, which generally contain common control channels, such as the Physical Control Format Indicator Channel (PCFICH), the Physical Hybrid-ARQ (Automatic Repeat Request) Indicator Channel (PHICH), and the Physical Downlink Control Channel (PDCCH), etc. Interference in the common channels would prevent the communication terminal from correctly demodulating channels carrying user data.

Embodiments consistent with the present disclosure cancel the pilot data from same-frequency neighbor cells through interference cancellation so that interference from same-frequency neighbor cells can be at least partly reduced during demodulation of data from the current cell. Additionally, embodiments consistent with the present disclosure may determine whether a received OFDM symbol needs to go through interference cancellation, taking into account such factors as whether any pilot data from neighbor cells are present in the OFDM symbols, and only performs interference cancellation on certain OFDM symbols.

For example, in step S102 shown in FIG. 1B, the communication terminal may obtain system configuration information of same-frequency neighbor cells prior to determining whether the received OFDM symbols contain pilot data of any of the same-frequency neighbor cells. If a received OFDM symbol contains pilot data from one or more of same-frequency neighbor cells, the communication terminal may proceed to perform interference cancellation on that OFDM symbol.

In addition to determining whether an OFDM symbol contains pilot data from neighbor cells, the communication terminal may also evaluate other factors in determining whether interference cancellation should be performed. For example, the communication terminal may determine interference reduction or cancellation should be performed based on system measurement information. In some embodiments, system measurement information includes the power of the current cell relative to the power of same-frequency neighbor cells. If, for example, the ratio of the power of a same-frequency neighbor cell to the power of the current cell is greater than a threshold, the communication terminal may determine to perform interference cancellation to reduce the impact of such a neighbor cell on the demodulation of the OFDM symbol.

In some embodiments, the communication terminal may obtain system configuration of a neighbor cell in system information broadcast by the neighbor cell including, for example, cell identity $\left( N_{\mathrm{ID}}^{\mathrm{cell}} \right)$ and MIMO configuration. Based on system information, it may be determined which OFDM symbols in a sub-frame contain pilot data from the neighbor cell. Table 1, as shown below, identifies exemplary OFDM symbols that may contain pilot data from a same-frequency neighbor cell. Particularly, Table 1 shows the OFDM symbols containing reference symbols or pilot signals in a subframe separately for normal cyclic prefix and extended cyclic prefix configurations and also separately for one-antenna, two-antenna, and four-antenna configurations. In the table, index $l$ indicates the position of the OFDM symbol in the subframe (not the time slots). Thus, if a neighbor cell uses a normal CP, two-antenna configuration, reference symbols or pilot data will be present in the first ($l = 0$), fifth ($l = 4$), eighth ($l = 7$), and twelfth ($l = 11$) OFDM symbols in the subframe received at the communication terminal.

Table 1

| Cyclic Prefix (CP) of Neighbor Cell | Antenna Configuration of Neighbor Cell | OFDM symbols Containing Cell Pilot Data / Reference Symbols |
|---|---|---|
| Normal CP | 1 | 0, 4, 7, 11 |
| Normal CP | 2 | 0, 4, 7, 11 |
| Normal CP | 4 | 0, 1, 4, 7, 8, 11 |
| Extended CP | 1 | 0, 3, 6, 9 |
| Extended CP | 2 | 0, 3, 6, 9 |
| Extended CP | 4 | 0, 1, 3, 6, 7, 9 |

Using Table 1, the communication terminal may determine that OFDM symbols with indices not found in the table do not need to go through interference reduction or cancellation. On the other hand, if a particular OFDM symbol is identified in Table 1 as containing pilot data from a neighbor cell, the communication terminal may proceed directly to performing interference reduction or cancellation, or may further evaluate system measurement information before doing so.

In some embodiments, system measurement information may include power measurements for the neighbor cell and the current cell for the received OFDM symbols. If the power of the neighbor cell is PowerInterfer_r for a neighbor cell r and the power of the current cell is Power_ServerCell, a ratio can be calculated as PowerRate_r= PowerInterfer_r/ Power_ServerCell. The communication terminal can compare PowerRate_r with a decision threshold PowerRateThreshold. If PowerRate_r is greater than PowerRateThreshold, same-frequency interference may be severe and the communication terminal may determine to perform interference reduction or cancellation on the corresponding OFDM symbol. If PowerRate_r is smaller than or equal to PowerRateThreshold, interference from cell *r may* be insignificant and no interference reduction or cancellation will be needed for the corresponding OFDM symbol. In some embodiments, the decision threshold can be a real number that is greater than 0 and can be determined according to the circumstances.

The determination step, e.g., Step S102 in Fig. 1B, may be performed with respect to all same-frequency neighbor cells. If no interference cancellation is needed for any of the same-frequency neighbor cells, the frequency domain data DataAftFft_l_j(k) can be considered the demodulated data for the current cell and the communication terminal skips the interference cancellation steps, i.e., Steps S103-S107 in Fig. 1B.

In some other embodiments, the determination of whether an OFDM symbol should be subject to interference cancellation can be carried out only with respect to OFDM symbol 0 and/or OFDM symbol 1. As described above, OFDM symbols 0 and 1 in a sub-frame correspond to common control channels, such as the PCFICH, the PHICH, and the PDCCH, etc. Performing interference cancellation only on OFDM symbols 0 and/or 1, if necessary, would significantly improve demodulation of the common control channels and system performance. Even though interference may still exist in other channels or OFDM symbols, performing interference cancellation only on the first or second OFDM symbols in the subframe provides significant improvement on system performance while introducing only a limited amount of additional data processing.

If it is determined that an OFDM symbol needs to go through interference reduction or cancellation, the communication terminal obtains the subcarrier data of the subcarriers in the OFDM symbol that contain pilot data from neighbor cell(s). In the examples shown in FIGs. 2 - 4, for each transmitting antenna, cell pilot data is transmitted at an interval of every sixth subcarriers. For example, in FIG. 3, the first column of symbol-subcarrier grid for antenna port No. 0, which corresponds to the first OFDM symbol, includes two references symbols $R_0$ that are six subcarriers apart on the first and seventh subcarriers, respectively, indicated by labels 303 and 304.

Thus, cell pilot data InterferCellRs_l_j_p_r(k) may be expressed in terms of frequency domain data DataAftFft_l_j: InterferCellRs_l_j_p_r(k) = DataAftFft_l_j (k0_r_p_l + 6 * k), where k is the subcarrier index, *j* is the index of the receiving antenna, *l* is the index of the OFDM symbol in a subframe, p is the index of the transmitting antenna, and r is cell ID. *k0_r_p_l* represents the starting position of a pilot frequency signal and can be obtained by a modulo operation defined as *k0_r_p_l = (v_r_p_l + V_{shift}_r)* mod 6, where the *v_r_p_l* and the *V_{shift}_r* are determined as follows. In FIGs. 2 - 4, for example, *k0_r_p_l can* be 0 or 3.

$$v_{\text{shift}} \_ r = N_{\text{ID}}^{\text{cell}} \bmod 6$$

$$v \_ r \_ p \_ l = \begin{cases} 0 & \text{if } p = 0 \text{ and } l' = 0 \\ 3 & \text{if } p = 0 \text{ and } l' \neq 0 \\ 3 & \text{if } p = 1 \text{ and } l' = 0 \\ 0 & \text{if } p = 1 \text{ and } l' \neq 0 \\ 3(n_s \bmod 2) & \text{if } p = 2 \\ 3 + 3(n_s \bmod 2) & \text{if } p = 3 \end{cases}$$

In the above expression, *v_r_p_l* is the offset determined by the transmitting antenna and the OFDM symbol, $N_{\text{ID}}^{\text{cell}}$ is the cell identity, $V_{shift}$ calculates the shift of reference symbols in position based on cell identity $N_{\text{ID}}^{\text{cell}}$, and $n_s$ is the slot number within a radio frame. $n_s$ can be obtained as the quotient part when *l* is divided by N_Dl_Symb, which is the number of OFDM symbols in an LTE downlink time slot. *l'* is the remainder part when *l* is divided by N_Dl_Symb. More detailed descriptions of the above expressions can be found in § 6.10.1.2 of 3GPP Technical Specification 36.211.

After cell pilot data of a same-frequency neighbor cell is obtained in Step S103, as explained above, the communication terminal proceeds to descramble the pilot data in Step S104. Scrambling and descrambling are techniques used in telecommunications to provide data security, where pseudorandom code sequences, referred to as scrambling codes or scrambling sequences, can be used to manipulate data before transmission and after reception. Thus, in some embodiments, descrambling the subcarrier data may include generating a complex scrambling code sequence and then descrambling the subcarrier data with the complex scrambling code sequence.

As an example, the complex scrambling code sequence can be generated based on cell identity $N_{\text{ID}}^{\text{cell}}$. The method of generating complex scrambling code sequence can be the same as or similar to that of generating a reference signal sequence as defined in § 6.10.1.1 of the 3GPP Technical Specification 36.211. For example, the complex scrambling code sequence can be expressed as Pn_$r$_$p(i)$, $i$ = 0, 1, 2...2 * N_max_DI_RB-1, where the N_max_Di_RB is the maximum number of resource blocks on the downlink and is set to be 110 for an LTE system.

After the complex scrambling code sequence is generated, the subcarrier data can be descrambled to generate descrambled subcarrier data:

CellRsAftDescramble_$l$_$j$_$p$_$r(k)$ = InterferCellRs_$l$_$j$_$p$_$r(k)$ * Conj(Pn_$r$_$p(i)$), where "Conj" represents a complex conjugation operation, $k$ is the subcarrier index and $k$ = 0, 1, 2...2* N_DI_RB-1, N_DL_RB is the downlink bandwidth configuration, and $i$ = $k$ + N_max_DI_RB - N_DI_RB. N_max_DI_RB is the maximum number of resource blocks on the downlink and is set to be 110 for an LTE system, and N_DI_RB is the number of resource blocks on the downlink, where each resource block, as defined in LTE, is a block of resource elements spanning one time slot and 12 subcarriers on the downlink. Exemplary values of the N_DL_RB with respect to different bandwidths are shown in Table 2 below.

Table 2

| Bandwidth | N_DI_RB Value |
|-----------|---------------|
| 20 M | 100 |
| 15 M | 75 |
| 10M | 50 |
| 5M | 25 |
| 3M | 15 |
| 1.4 M | 6 |

In Step S104, the communication terminal smoothes the descrambled subcarrier data of the neighbor cell to remove noise and/or interference caused by transmissions from other cells, including the current cell, so that the resultant smoothed subcarrier data more accurately reflect the subcarriers carrying pilot data of the neighbor cell. In some embodiments, a filter can be applied to generate smoothed subcarrier data CellRsAftFilter_$l$_$j$_$p$_$r(k)$. The filter may smooth the subcarrier data over any or all of the indices $l$, $j$, $p$, or r. As noted above, $k$ is the subcarrier index, and $k$ = 0, 1, 2... 2 * N_DI_RB-1, $j$ is the index of the receiving antenna, $l$ is the index of OFDM symbol in a sub-frame, p is the index of the transmitting antenna, and r is the cell identity. The type of filter that can be used for smoothing may be an IIR (Infinite Impulse Response) filter or an FIR (Finite Impulse Response) filter. Both the IIR filter and the FIR filter can be a bandpass filter or a low-pass filter. In addition, smoothing can also be carried out as a summing or averaging operation.

Using the FIR filter as an example, the smoothed subcarrier data CellRsAftFilter_$l$_$j$_$p$_$r$ can be expressed as the convolution of descrambled subcarrier data CellRsAftDescramble_$l$_$j$_$p$_$r(k)$ and the filter's impulse response FirParam_$r$. That is, CellRsAftFilter_$l$_$j$_$p$_$r$ = Conv(CellRsAftDescramble_$l$_$j$_$p$_$r$, FirParam_r), where "Conv" represents convolution operation. The filter's impulse response FirParam_$r$ can be either a real number or a complex number. CellRsAftFilter_$l$_$j$_$p$_r contains the results of the convolution with the leading and trailing elements removed.

In some other embodiments, the smoothing process, i.e., step S105 in FIG. 1B, may include time-frequency domain conversion. For example, the communication terminal may first convert the subcarrier data from frequency domain to time domain, select multipath signals, and then convert the multipath signals back to frequency domain.

As noted above, the communication terminal may smooth the descrambled subcarrier data across the subcarriers, as explained in connection with the FIR example above, or across transmitting antennas, receiving antennas, OFDM symbols, or neighbor cells, or a combination thereof. For example, a filter may be applied to smooth the subcarrier data across transmitting antennas to reduce nonuniform interference between multiple transmitting antennas. Such smoothing may be carried out in a single step (i.e., Step S105), or in multiple steps.

As an example, the smoothed subcarrier data CellRsAftFilter_$l$_$j$_$p$_$r$(k) generated in step S105 can be further smoothed across multiple OFDM symbols using the OFDM symbols that contain cell pilot data from neighbor cells, resulting in data CellRsAftFilter_$l$_$j$_$p$_$r$(k) smoothed across OFDM symbols (index $l$) as well as subcarriers (index k).

As shown in Table 1 above, in a four-antenna configuration, OFDM symbol containing cell pilot data have indices 0, 1, 4, 7, 8, and 11, and subcarriers containing cell pilot data have indices 0, 3, 6, and 9. Thus, in one embodiment, for each of OFDM symbols 0, 1, 4, 7, 8, or 11, the smoothed subcarrier data CellRsAftFilter_$l$_$j$_$p$_$r(k)$ obtained in step S105 can be further smoothed or processed over the ranges of indices $j$, $p$, and r. In another embodiment, for each of subcarriers 0, 3, 6, or 9, the smoothed subcarrier data CellRsAftFilter_$l$_$j$_$p$_$r(k)$ can be further smoothed or processed over the ranges of indices *j, p,* and r. In another embodiment, for each of OFDM symbols 0, 1, 4, 7, 8, or 11, and each of subcarriers 0, 3, 6, or 9, the smoothed subcarrier data CellRsAftFilter_*l_j_p_r*(*k*), as obtained in step S105, can be further smoothed or processed over the ranges of indices *j, p,* and r. One of ordinary skill in the art would appreciate that embodiments of the smoothing operations described above are illustrative only and not exhaustive.

Referring to FIG. 1B, after smoothing, in step S106, the communication terminal scrambles the smoothed subcarrier data. In particular, the smoothed subcarrier data CellRsAftFilter_*l_j_p_r*(*k*) can be scrambled based with the complex scrambling code sequence Pn_*r_p(i):* CellRsAftScramble_*l_j_p_r*(*k*) = CellRsAftFilter_*l_j_p_r*(*k*) * Pn_*r_p(i),* where *i = k*+N_max_DI_RB-N_DI_RB, *j* is the index of receiving antenna, *l* is the index of OFDM symbol in a sub-frame, p is the index of transmitting antenna, the k is the subcarrier index and k = 0,1,2...2* N_DI_RB-1, ris cell identity, N_max_DI_RB is the maximum number of resource blocks on the downlink, and N_DI_RB is the number of resource blocks on the downlink. Complex scrambling code sequence Pn_*r_p(i)* can be the same as or similar to the sequence used in the descrambling operation in step S104.

Referring back to FIG. 1B, after scrambling the smoothed subcarrier data in step S106, in step S107, the communication terminal reduces or cancels interference using the scrambled subcarrier data. In some embodiments, interference reduction or cancellation in step S107 may include multiplying the scrambled subcarrier data with a weighting factor and subtracting the weighted scrambled subcarrier data from the frequency domain data of the received OFDM symbols.

As an example, to reduce or cancel interference, a weighted scrambled subcarrier data for each subcarrier that contains pilot data from a neighbor cell is subtracted from the frequency domain data DataAftFft_*l_jr*(*k*). In particular, if variable DataAftReduceInterfer_*l_j*(*k*) is used to hold the data after interference reduction or cancellation, DataAftReduceInterfer_*l_j*(*k*) may be initialized as frequency domain data DataAftFft_*l_j*(*k*), i.e., DataAftReduceInterfer_*l_j*(*k*) = DataAftFft_*l_j*(*k*). For the subcarriers that contain pilot data from a neighbor cell and therefore need to be taken into account for interference reduction or cancellation, an index m = k mod 6 may be assigned, where k is the subcarrier index and "mod" represents a modulo operation. Given the values of m and *k0_r_p_l* one can determine a subset of *k0_r_p_l,* which includes the values of *k0_r_p_l* that equals m. Interference reduction or cancellation can then be iteratively carried out with respect to every value in the subset of *k0_r_p_l,* i.e., DataAftReduceInterfer_*l_j*(*k*) = DataAftReduceInterfer_*l_j*(*k*) - Alpha * CellRsAftScramble_*l_j_p_r*(*i*), where *i = (k-k0_r_p_l)*/6 and "Alpha" is a weighting factor, which may be a real number between 0 and 1.

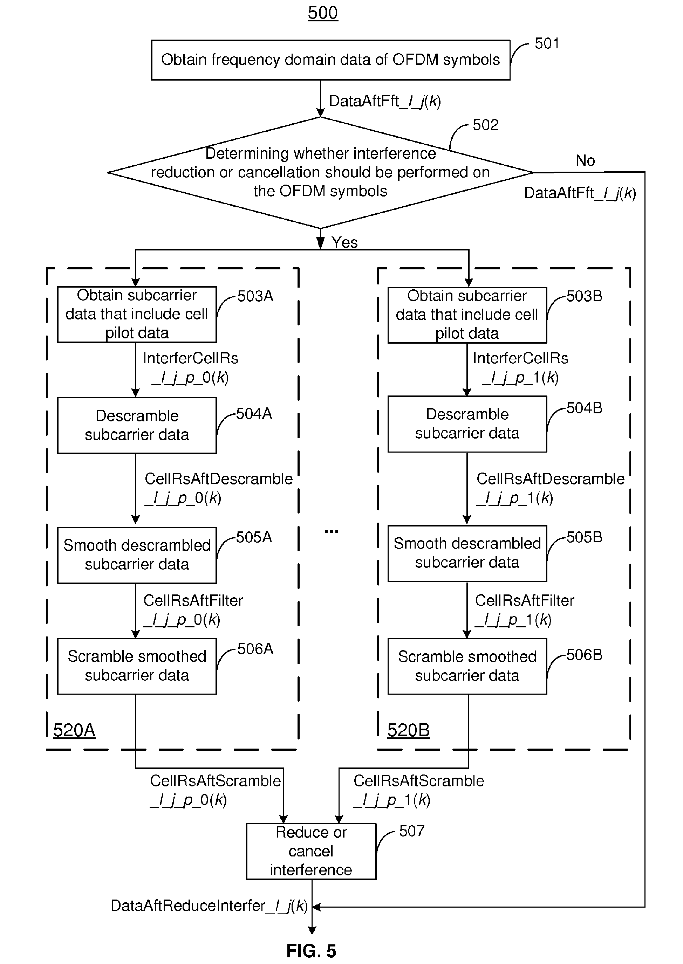

FIG. 5 illustrates an exemplary signal processing flow 500 for reducing or canceling interference consistent with embodiments of the present disclosure. Particularly, in step 501, a communication terminal obtains frequency domain data DataAftFft_*l_j*(k) of the OFDM symbols in a sub-frame. In step 502, the communication terminal determines, based on the frequency domain data DataAftFft_*l_j*(k), whether interference reduction or cancellation should be performed on the corresponding OFDM symbols. If the answer is "no," then the communication terminal does not perform interference reduction or cancellation on the corresponding OFDM symbols.

If the answer is "yes," then the communication terminal first detects interference from each same-frequency neighbor cell. Fig. 5 shows two parallel processes, 520A and 520B, for reducing or cancelling interference from two same-frequency neighbor cells. One of ordinary skill in the art would appreciate that reducing or cancelling interference from one cell or more than two cells can be achieved in a similar fashion. Further, one of ordinary skill in the art would appreciate that reducing or cancelling interference from multiple neighbor cells can be carried in parallel, in series, or in combination.

Processes 520A and 520B are basically the same, and in each process, the communication terminal obtains subcarrier data that include cell pilot data of a same-frequency neighbor cell (step 503A/B), descrambles the subcarrier data (504A/B), smoothes the descrambled subcarrier data (505A/B), and scrambles the smoothed subcarrier data (506A/B).

Using process 520A as an example, in step 503A, the communication terminal obtains subcarrier data InterferCellRs_*l_j_p*_0(*k*) or the subcarriers that include cell pilot data of a same-frequency neighbor cell 0. In step 504A, the communication terminal descrambles subcarrier data InterferCellRs_*l_j_p*_0(*k*) and generates descrambled signal CellRsAftDescramble_*l_j_p*_0(*k*). In step 505A, the communication terminal smoothes the descrambled signal CellRsAftDescramble_*l_j_p*_0(*k*) and generates smoothed subcarrier data CellRsAftFilter_*l_j_p*_0(*k*). In step 506A, the communication terminal scrambles the smoothed subcarrier data CellRsAftFilter_*l_j_p*_0(*k*) and generates scrambled subcarrier data CellRsAftScramble_*l_j_p*_0(*k*) as the output of process 520A. Similarly, process 520B performs steps 503B - 506B to output scrambled subcarrier data CellRsAftScramble_*l_j_p*_1(*k*) for a same-frequency neighbor cell 1 that interferes with the current cell.

After completion of interference detection with respect to each of same-frequency neighbor cells that interferes with the current cell, in step 507, the scrambled subcarrier data for the two neighbor cells 0 and 1, i.e., CellRsAftScramble_*l_j_p*_0(*k*) and CellRsAftScramble_*l_j_p*_1(*k*), are used to reduce or cancel interference in the frequency domain data DataAftFft_*l_j*(k) and generate output data DataAftReduceInterfer_*l_j*(*k*), which can be demodulated in the subsequent processing steps (not shown in FIG. 5).

The method described corresponding to the steps 501 - 507 can effectively reduce or cancel interference from the same-frequency neighbor cells, as well as improve the performance of the communication terminal at cell edges and overall system performance.

Consistent with embodiments of the present disclosure, there is also provided a method for demodulating data in the communication terminal based on the interference reduction or cancellation technologies explained herein. In some embodiments, the method for demodulating data in a communication terminal includes reducing or cancelling interference in the communication terminal as described in the various embodiments corresponding to FIGs. 1-5, and demodulating at least one signal channel based on interference-reduced or interference-cancelled frequency domain data.

As an example, data DataAftReduceInterfer_$l\_j(k)$ generated from the process shown in FIG. 5 may be demodulated to generate data for each physical channel, such as the PCFICH, the PHICH, the PDCCH, the Physical Downlink Shared Channel (PDSCH), and the Physical Broadcast Channel (PBCH). With interference from same-frequency neighbor cells removed, accuracy of demodulation for the PCFICH, the PHICH, and the PDCCH can be significantly improved and, as a result, demodulation of the PDSCH and PBCH is more reliable and accurate. Consequently, overall system performance and capability are also improved.

If it is determined that interference reduction or cancellation is not needed with respect to all of the same-frequency neighbor cells, then no interference cancellation or reduction is performed on the frequency domain data in the received OFDM symbols, and demodulation is performed directly on the frequency domain data of the OFDM symbols to generate data for the various channels.

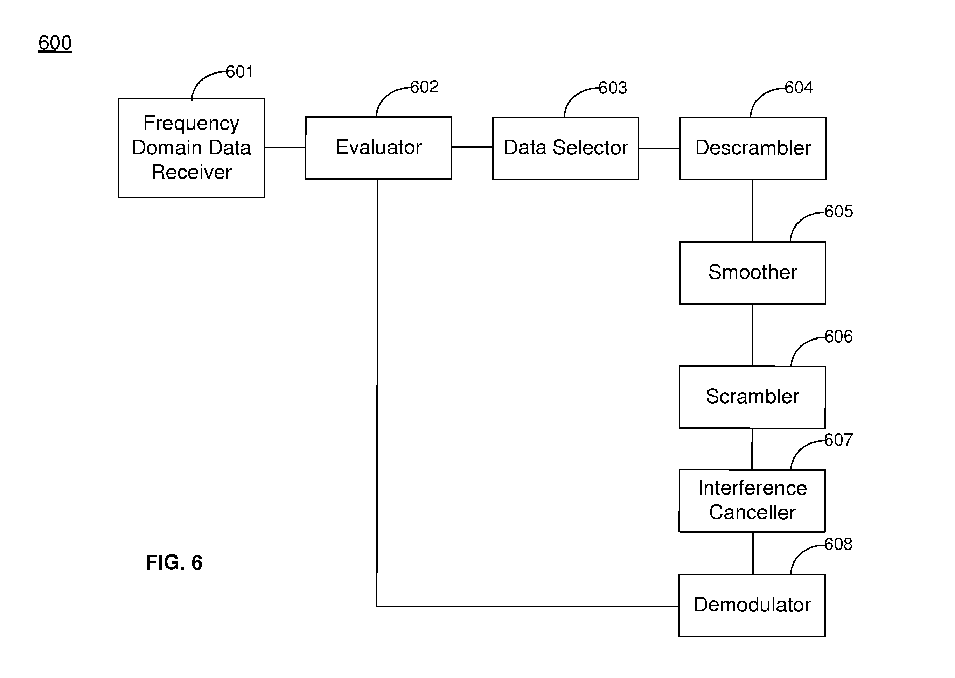

FIG. 6 is an exemplary block diagram of a communication terminal, such as apparatus 600, showing components for reducing or cancelling interference consistent with embodiments of the present disclosure. As shown in FIG. 6, apparatus 600 includes a frequency domain data receiver 601 that receives frequency domain data in received OFDM symbols; an evaluator 602 that determines whether interference reduction or cancellation should be performed on the OFDM symbols; a data selector 603 that retrieves, from the frequency domain data, subcarrier data of the subcarriers that include cell pilot data of one or more same-frequency neighbor cells; a descrambler 604 that descrambles the retrieved subcarrier data; a smoother 605 that smoothes the descrambled subcarrier data; a scrambler 606 that scrambles the smoothed subcarrier data; an interference canceller 607 that reduces or cancels interference based on the scrambled subcarrier data; and a demodulator 608 that demodulates frequency domain data to generate data for various channels.

Frequency domain data receiver 601 may receive frequency domain data from a Fourier transform engine (not shown in the figure) that converts the received time domain OFDM symbol data into frequency domain data. The frequency domain data is passed onto evaluator 602, which determines, based on the frequency domain data, as well as other factors mentioned above, whether interference reduction or cancellation should be performed on the corresponding OFDM symbol(s). In some embodiments, evaluator 602 may include a cell acquisition unit (not shown in FIG. 6) that detects system configuration of, and/or measures signal transmissions from, neighbor cells. Evaluator 602 may then determine whether interference reduction or cancellation should be performed based on the system configuration or measurements of the neighbor cells.

In some embodiments, evaluator 602 measures the power of the current cell and the power of neighbor cells and makes a determination based on the relative power levels. In particular, if a ratio of the power of a neighbor cell to the power of the current cell is greater than a threshold, evaluator 602 concludes that interference reduction or cancellation may be required.

Further, as explained above, the determination of whether interference reduction or cancellation is needed may be performed on all or selected ones of the received OFDM symbols. For example, evaluator 602 may make such determination only on the first and/or second OFDM symbols in a subframe.

If evaluator 602 determines that interference cancellation or reduction should not be performed, then the frequency domain data is directly forwarded to demodulator 608 for demodulation.

If evaluator 602 determines that interference cancellation or reduction should be performed, then the frequency domain data is forwarded to data selector 603 for retrieval of subcarrier data of those subcarriers that contain pilot data from neighbor cells. Then, descrambler 604 descrambles the subcarrier data with scrambling code sequence(s) corresponding to the respective neighbor cell(s).

Smoother 605 smoothes the descrambled subcarrier data to remove noise or interference in the subcarrier data of the neighbor cells, as explained above. Also, consistent with what is described above, smoother 605 may perform a smoothing operation across subcarriers, transmitting antennas, receiving antennas, OFDM symbols, and/or neighbor cells. Further, smoother 605 may include one smoothing unit for performing such smoothing operation or, alternatively, may include multiple smoothing units for performing multiple smoothing operations either in parallel or in series. The smoothing operation may be filtering, summing, or averaging, as discussed above. Further, smoother 605 may perform smoothing through a time-frequency domain conversion, as discussed above.

The output of smoother 605, i.e., the smoothed subcarrier data, is then forwarded to scrambler 606, which scrambles the subcarrier data with scrambling code sequence(s) corresponding to the neighbor cell(s).

Interference canceller 607 receives the scrambled subcarrier data and reduces or cancels interference in the frequency domain data of the received OFDM symbols by subtracting the scrambled subcarrier data of each neighboring output by smoother 605. As explained above, the subtraction operation may be a weighted subtraction, where the scrambled subcarrier data is first multiplied with a weight before being subtracted from the frequency domain data. After the subtraction operation, the output of interference canceller 607 is forwarded to demodulator 608 for demodulation.

In summary, embodiments consistent with the present disclosure provide interference reduction or cancellation by obtaining subcarrier data of subcarriers that contain pilot data of same-frequency neighbor cells, processing the subcarrier data of the pilot data from neighbor cells, and subtracting the processed subcarrier data from the frequency domain data in received OFDM symbols. Interference reduction or cancellation methods described herein can effectively reduce or cancel interference from same-frequency neighbor cells, improving a communication terminal's resistance to interference and performance on cell edges.

One of ordinary skill in the art would also appreciate that features of the components illustrated in FIG. 6 and described above can be implemented in either hardware or software. For example, frequency domain data receiver may be implemented in hardware as multiplexers, demultiplexers, and determination logic circuits; or, alternatively, implemented in software that, for example, receives and stores frequency domain data. As another example, one of ordinary skill would appreciate that a scrambler or descrambler, which may comprise exclusive OR operations, can be implemented as easily in hardware as in software. Likewise, one of ordinary skill in the art would appreciate that other components illustrated in FIG. 6 can also be implemented either in hardware or in software.

Communication terminals consistent with embodiments of the present disclosure, such as the apparatus illustrated in FIG. 6, may be user equipment (UE) or mobile stations, or systems including such. Although not discussed herein, UE or mobile stations may include any one of or a combination of antennas, receivers, transmitters, processors, memories, and/or any other well-known communication components. Systems including UE or mobile stations may also include base stations, eNode Bs, relay stations, and/or access points.

Furthermore, one of ordinary skill in the art would appreciate that the illustrated procedures and apparatus components can be modified without deviating from the spirit of the invention. For example, in the processes described above, additional steps may be introduced or certain steps may be removed. In the apparatus illustrated in Fig. 6, several individual components may be combined into one, such as an integrated circuit chip, or features or functions of a certain component may be divided across multiple hardware or software components.

Moreover, as discussed above, interference cancellation or reduction may be performed on selected OFDM symbols, such as those that contain common control channel data, providing improvement on system performance while introducing only a limited amount of additional data processing.

Other embodiments of the subject matter will be apparent to those skilled in the art from consideration of the specification and practice of the subject matter disclosed herein. The scope of the disclosed subject matter is intended to cover any variations, uses, or adaptations of the subject matter following the general principles thereof and including such departures from the present disclosure as come within known or customary practice in the art. It is intended that the specification and examples be considered as exemplary only, with a true scope and spirit of the subject matter being indicated by the following claims.

It will be appreciated that the present disclosure is not limited to the exact construction that has been described above and illustrated in the accompanying drawings, and that various modifications and changes can be made without departing from the scope thereof. It is intended that the scope of the subject matter only be limited by the appended claims.

**Claims**

1. A method in a communication terminal for reducing or cancelling inter-cell interference in a multicarrier communication system, wherein communication in the multicarrier communication system is carried out over a plurality of subcarriers, and wherein the communication terminal communicates with an interface station, comprising:

    receiving multicarrier symbols, the multicarrier symbols including pilot data from other interface stations not in communication with the communication terminal;
    retrieving subcarrier data of the subcarriers containing the pilot data from the received multicarrier symbols; and
    reducing interference in the received multicarrier symbols based on the retrieved subcarrier data.

2. The method of claim 1, wherein the multicarrier communication system is based on orthogonal frequency division multiplexing (OFDM) technology and the multicarrier symbols are OFDM symbols.

3. The method of claim 1 or claim 2, further comprising, for one of the multicarrier symbols, determining whether interference cancellation or reduction is needed.

**4.** The method of claim 3, wherein the determining comprises determining based on an index of the multicarrier symbols including the pilot data.

**5.** The method of any preceding claim, wherein the multicarrier communication system is a long term evolution (LTE) cellular communication system with multiple-input-multiple-output antenna configuration, wherein the multicarrier symbols are OFDM symbols.

**6.** The method of claim 5, wherein the interface station with which the communication terminal communicates is located in a current cell of the LTE cellular communication system, wherein the pilot data are from a neighbor cell in the LTE cellular communication system, and wherein the neighbor cell and the current cell have the same or substantially the same center frequency.

**7.** The method of claim 6, further comprising, for one of the OFDM symbols, determining whether interference cancellation or reduction is needed.

**8.** The method of claim 7, wherein the determining comprises determining based on one or more of an index of the multicarrier symbols including the pilot data, an index of a transmitting antenna, an index of a receiving antenna, an index of the OFDM symbols, or an identifier of the neighbor cell.

**9.** The method of claim 7, wherein the determining comprises determining based on a configuration of the neighbor cell.

**10.** The method of claim 7, wherein the determining comprises:

measuring the transmission power from the neighbor cell, and
determining whether interference cancellation or reduction is needed for the one of the OFDM symbols based on a measurement of transmission power.

**11.** The method of claim 10, wherein the determining further comprises:

measuring the transmission power from the current cell,
comparing the transmission power from the neighbor cell and the transmission power from the current cell, and
determining whether interference cancellation or reduction is needed for the one of the OFDM symbols based on a result of the comparison and a threshold value.

**12.** The method of claim 7, wherein the determining comprises determining if the one of the OFDM symbols carries a common control channel.

**13.** The method of claim 12, wherein the common control channel is a Physical Control Format Indicator Channel (PCFICH), a Physical Hybrid-ARQ (Automatic Repeat Request) Indicator Channel (PHICH), or a Physical Downlink Control Channel (PDCCH).

**14.** The method of claim 12, wherein, if the one of the OFDM symbols carries a common control channel, the communication terminal does not perform the retrieving or the reducing steps on the one of the OFDM symbols.

**15.** The method of any preceding claim, further comprising:

descrambling the subcarrier data;
smoothing the descrambled subcarrier data;
scrambling the smoothed subcarrier data; and
reducing or cancelling interference in the multicarrier symbols based on the scrambled subcarrier data.

**16.** The method of claim 15, wherein the smoothing comprises transforming the descrambled subcarrier data between a frequency domain and a time domain.

**17.** The method of claim 15, wherein the smoothing comprises filtering the descrambled subcarrier data.

**18.** The method of claim 17, wherein the filtering comprises applying a finite impulse filter (FIR) or an infinite impulse filter on the descrambled subcarrier data.

19. The method of claim 15, wherein the smoothing comprises computing a sum of the descrambled subcarrier data.

20. The method of claim 15, wherein the smoothing comprises computing an average of the descrambled subcarrier data.

21. The method of claim 15, wherein the smoothing comprises smoothing the descrambled subcarrier data across one or more of subcarriers, OFDM symbols, transmitting antennas, receiving antennas, or cells in the LTE system.

22. The method of any preceding claim, wherein the reducing comprises weighting the scrambled subcarrier data with a weighting factor; and subtracting the weighted scrambled subcarrier data from the multicarrier symbols.

23. The method of any preceding claim, further comprising demodulating the received multicarrier symbols after the step of reducing interference.

24. The method of any preceding claim, wherein the communication terminal operates in at least one of LTE, WiMAX, and WiFi modes.

25. A communication terminal in a multicarrier communication system, wherein communication in the multicarrier communication system is carried out over a plurality of subcarriers, and wherein the communication terminal communicates with an interface station, the communication terminal comprising:

   a receiver that receives multicarrier symbols, the multicarrier symbols including pilot data from other interface stations not in communication with the communication terminal;
   a frequency domain data receiver that receives frequency domain data in the multicarrier symbols;
   a data selector that retrieves subcarrier data of the subcarriers containing the pilot data from the received multicarrier symbols; and
   an interference canceller that reduces interference in the multicarrier symbols based on the retrieved subcarrier data.

26. The communication terminal of claim 25, wherein the multicarrier communication system is based on orthogonal frequency division multiplexing (OFDM) technology and the multicarrier symbols are OFDM symbols.

27. The communication terminal of claim 25 or claim 26, further comprising an evaluator that determines, for one of the multicarrier symbols, whether interference cancellation or reduction is needed.

28. The communication terminal of claim 27, wherein the evaluator determines whether interference cancellation or reduction is needed based on an index of the multicarrier symbols including the pilot data.

29. The communication terminal of any one of claims 25 to 28, wherein the multicarrier communication system is a long term evolution (LTE) cellular communication system with multiple-input-multiple-output antenna configuration, wherein the multicarrier symbols are OFDM symbols.

30. The communication terminal of claim 29, wherein the interface station with which the communication terminal communicates is located in a current cell of the LTE cellular communication system, wherein the pilot data are from a neighbor cell in the LTE cellular communication system, and wherein the neighbor cell and the current cell have the same or substantially the same center frequency.

31. The communication terminal of claim 30, further comprising an evaluator that determines, for one of the OFDM symbols, whether interference cancellation or reduction is needed.

32. The communication terminal of claim 31, wherein the evaluator determines whether interference cancellation or reduction is needed based on one or more of an index of the multicarrier symbols including the pilot data, an index of a transmitting antenna, an index of a receiving antenna, an index of the OFDM symbols, or an identifier of the neighbor cell.

33. The communication terminal of claim 31, wherein the evaluator determines whether interference cancellation or reduction is needed based on a configuration of the neighbor cell.

34. The communication terminal of claim 31, wherein the evaluator determines whether interference cancellation or reduction is needed based on a measurement of the transmission power from the neighbor cell.

35. The communication terminal of claim 34, wherein the evaluator determines whether interference cancellation or reduction is needed based on a transmission power from the current cell, a transmission power from the neighbor cell, and a threshold value.

36. The communication terminal of claim 31, wherein the evaluator whether interference cancellation or reduction is needed based on whether the one of the OFDM symbols carries a common control channel.

37. The communication terminal of claim 36, wherein the common control channel is a Physical Control Format Indicator Channel (PCFICH), a Physical Hybrid-ARQ (Automatic Repeat Request) Indicator Channel (PHICH), or a Physical Downlink Control Channel (PDCCH).

38. The communication terminal of claim 36, wherein, if the one of the OFDM symbols carries a common control channel, the communication terminal does not perform the retrieving or the reducing steps on the one of the OFDM symbols.

39. The communication terminal of any one of claims 25 to 38, further comprising:

a descrambler that descrambles the subcarrier data;
a smoother that smoothes the descrambled subcarrier data; and
a scrambler that scrambles the smoothed subcarrier data,
wherein the interface canceller reduces or cancels interference in the multicarrier symbols based on the scrambled subcarrier data.

40. The communication terminal of claim 39, wherein the smoother transforms the descrambled subcarrier data between a frequency domain and a time domain.

41. The communication terminal of claim 39, wherein the smoother filters the descrambled subcarrier data.

42. The communication terminal of claim 41, wherein the smoother applies a finite impulse filter (FIR) or an infinite impulse filter on the descrambled subcarrier data.

43. The communication terminal of claim 39, wherein the smoother computes a sum of the descrambled subcarrier data.

44. The communication terminal of claim 39, wherein the smoother computes an average of the descrambled subcarrier data.

45. The communication terminal of claim 39, wherein the smoother smoothes the descrambled subcarrier data across one or more of subcarriers, OFDM symbols, transmitting antennas, receiving antennas, or cells in the LTE system.

46. The communication terminal of any one of claims 25 to 45, wherein the interference canceller weights the scrambled subcarrier data with a weighting factor and subtracts the weighted scrambled subcarrier data from the multicarrier symbols.

47. The communication terminal of any one of claims 25 to 46, further comprising a demodulator that demodulates the received multicarrier symbols after the interference canceller reduces the interference.

48. The communication terminal of any one of claims 25 to 47, wherein the communication terminal operates in at least one of LTE, WiMAX, and WiFi modes.

<u>100</u>

```
┌──────────────────────────────────────────────────────┐
│  Obtain subcarrier data of subcarriers carrying pilot │ ─S103
│  data of same-frequency neighboring cell              │
└──────────────────────────────────────────────────────┘
                          │
                          ▼
┌──────────────────────────────────────────────────────┐
│              Descramble subcarrier data               │ ─S104
└──────────────────────────────────────────────────────┘
                          │
                          ▼
┌──────────────────────────────────────────────────────┐
│         Smooth descrambled subcarrier data            │ ─S105
└──────────────────────────────────────────────────────┘
                          │
                          ▼
┌──────────────────────────────────────────────────────┐
│          Scramble smoothed subcarrier data            │ ─S106
└──────────────────────────────────────────────────────┘
                          │
                          ▼
┌──────────────────────────────────────────────────────┐
│  Reduce or cancel interference in the frequency       │ ─S107
│  domain data with scrambled subcarrier data           │
└──────────────────────────────────────────────────────┘
                          │
                          ▼
```

**FIG. 1A**

<u>160</u>

```
┌──────────────────────────────────────────────────────┐
│        Obtain frequency domain data of OFDM symbols    │──S101
└──────────────────────────────────────────────────────┘
                          │
                          ▼
            ╱─────────────────────────────╲
           ╱   Determine whether an OFDM    ╲
No ◄──────╱   symbol needs interference       ╲──S102
          ╲   reduction or cancellation       ╱
           ╲─────────────────────────────────╱
                          │ Yes
                          ▼
┌──────────────────────────────────────────────────────┐
│ Obtain subcarrier data of subcarriers carrying pilot   │──S103
│ data of same-frequency neighboring cell                │
└──────────────────────────────────────────────────────┘
                          │
                          ▼
┌──────────────────────────────────────────────────────┐
│              Descramble subcarrier data                │──S104
└──────────────────────────────────────────────────────┘
                          │
                          ▼
┌──────────────────────────────────────────────────────┐
│           Smooth descrambled subcarrier data           │──S105
└──────────────────────────────────────────────────────┘
                          │
                          ▼
┌──────────────────────────────────────────────────────┐
│            Scramble smoothed subcarrier data           │──S106
└──────────────────────────────────────────────────────┘
                          │
                          ▼
┌──────────────────────────────────────────────────────┐
│ Reduce or cancel interference in the frequency domain  │──S107
│ data with scrambled subcarrier data                    │
└──────────────────────────────────────────────────────┘
                          │
                          ▼
```

**FIG. 1B**

200

One-antenna configuration

FIG. 2

## 300

Two-antenna configuration

FIG. 3

FIG. 4

## 500

Obtain frequency domain data of OFDM symbols ⟋ 501

DataAftFft_$l$_$j$($k$)

Determining whether interference reduction or cancellation should be performed on the OFDM symbols ⟋ 502

No

DataAftFft_$l$_$j$($k$)

Yes

Obtain subcarrier data that include cell pilot data ⟋ 503A

InterferCellRs_$l$_$j$_$p$_0($k$)

Descramble subcarrier data ⟋ 504A

CellRsAftDescramble_$l$_$j$_$p$_0($k$)

Smooth descrambled subcarrier data ⟋ 505A

CellRsAftFilter_$l$_$j$_$p$_0($k$)

Scramble smoothed subcarrier data ⟋ 506A

520A

...

Obtain subcarrier data that include cell pilot data ⟋ 503B

InterferCellRs_$l$_$j$_$p$_1($k$)

Descramble subcarrier data ⟋ 504B

CellRsAftDescramble_$l$_$j$_$p$_1($k$)

Smooth descrambled subcarrier data ⟋ 505B

CellRsAftFilter_$l$_$j$_$p$_1($k$)

Scramble smoothed subcarrier data ⟋ 506B

520B

CellRsAftScramble_$l$_$j$_$p$_0($k$)

CellRsAftScramble_$l$_$j$_$p$_1($k$)

Reduce or cancel interference ⟋ 507

DataAftReduceInterfer_$l$_$j$($k$)

**FIG. 5**

Europäisches
Patentamt

European
Patent Office

Office européen
des brevets

# EUROPEAN SEARCH REPORT

Application Number

EP 12 19 8281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/099810 A2 (QUALCOMM INC [US]; JI TINGFANG [US]; AGRAWAL AVNEESH [US]; GOROKHOV AL) 13 August 2009 (2009-08-13) * paragraphs [0062] - [0075]; claims 33-40; figures 8,9 * | 1-48 | INV. H04J11/00 |
| X | US 2007/008873 A1 (STOPLER DAN [IL]) 11 January 2007 (2007-01-11) | 1,2,25, 26 | |
| A | * pages 1-2; claim 9 * | 3-24, 27-48 | |
| X | US 2011/267937 A1 (YOO TAESANG [US] ET AL) 3 November 2011 (2011-11-03) | 1,2,25, 26 | |
| A | * abstract * * paragraphs [0059] - [0077]; figures 6-10 * | 3-24, 27-48 | |

TECHNICAL FIELDS
SEARCHED       (IPC)

H04J
H04B

The present search report has been drawn up for all claims

| Place of search | Date of completion of the search | Examiner |
|---|---|---|
| Munich | 10 May 2013 | Ó Donnabháin, Emma |

EPO FORM 1503 03.82 (P04C01)

## ANNEX TO THE EUROPEAN SEARCH REPORT
## ON EUROPEAN PATENT APPLICATION NO.

EP 12 19 8281

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2013

| Patent document cited in search report | | Publication date | Patent family member(s) | | Publication date |
|---|---|---|---|---|---|
| WO 2009099810 | A2 | 13-08-2009 | AU 2009210526 | A1 | 13-08-2009 |
| | | | CA 2713697 | A1 | 13-08-2009 |
| | | | CN 101983531 | A | 02-03-2011 |
| | | | EP 2241142 | A2 | 20-10-2010 |
| | | | EP 2512193 | A1 | 17-10-2012 |
| | | | JP 2011514717 | A | 06-05-2011 |
| | | | KR 20100113607 | A | 21-10-2010 |
| | | | KR 20120099259 | A | 07-09-2012 |
| | | | KR 20130008063 | A | 21-01-2013 |
| | | | RU 2010136046 | A | 20-03-2012 |
| | | | SG 188089 | A1 | 28-03-2013 |
| | | | TW 200947987 | A | 16-11-2009 |
| | | | US 2010020771 | A1 | 28-01-2010 |
| | | | WO 2009099810 | A2 | 13-08-2009 |
| US 2007008873 | A1 | 11-01-2007 | IL 169417 | A | 31-05-2011 |
| | | | US 2007008873 | A1 | 11-01-2007 |
| US 2011267937 | A1 | 03-11-2011 | CN 102959894 | A | 06-03-2013 |
| | | | EP 2564546 | A1 | 06-03-2013 |
| | | | KR 20130009860 | A | 23-01-2013 |
| | | | US 2011267937 | A1 | 03-11-2011 |
| | | | WO 2011137314 | A1 | 03-11-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110428550X

- WO 2011136518 A2